# EUROPEAN PATENT SPECIFICATION

(11) **EP 3 965 009 B1**
(45) Date of publication and mention of the grant of the patent: **11.11.2026**
(21) Application number: 20195059.9
(22) Date of filing: 08.09.2020
(51) Int. Cl.: G06F 18/2413, G06V 10/44, G06V 10/764, G06V 10/77, G06N 3/0464, G06N 3/09

(54) **DEVICE AND METHOD FOR TRAINING A SCALE-EQUIVARIANT CONVOLUTIONAL NEURAL NETWORK**
VORRICHTUNG UND VERFAHREN ZUM TRAINIEREN EINES SKALENÄQUIVARIANTEN NEURONALEN FALTUNGSNETZES
DISPOSITIF ET PROCÉDÉ DE FORMATION D'UN RÉSEAU NEURONAL CONVOLUTIF À ÉCHELLE ÉQUIVARIANTE

(43) Date of publication of application: 09.03.2022
(73) Proprietor: Robert Bosch GmbH, 70442 Stuttgart (DE)
(72) Inventor: Sosnovik, Ivan, 1055AA Amsterdam (NL); Smeulders, Arnold, 1074BH Amsterdam (NL); Groh, Konrad, 70193 Stuttgart (DE)

(56) References cited:
- IVAN SOSNOVIK ET AL: "Scale-Equivariant Steerable Networks", ARXIV.ORG, CORNELL UNIVERSITY LIBRARY, 201 OLIN LIBRARY CORNELL UNIVERSITY ITHACA, NY 14853, 14 October 2019 (2019-10-14), XP081520182
- NADERI HANIEH ET AL: "Scale Equivariant CNNs with Scale Steerable Filters", 2020 INTERNATIONAL CONFERENCE ON MACHINE VISION AND IMAGE PROCESSING (MVIP), IEEE, 18 February 2020 (2020-02-18), pages 1 - 5, XP033781929, DOI: 10.1109/MVIP49855.2020.9116889

## Description

The invention concerns a method for training a scale-equivariant convolutional neural network, a method for classifying images with a scale-equivariant convolutional neural network, a training system, a computer program and a computer-readable storage medium.

### Prior art

Ivan Sosnovik, Micha 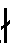 Szmaja, Arnold Smeulders, "Scale-Equivariant Steerable Networks", 2019, https://arxiv.org/abs/1910.11093v1 discloses a convolutional neural network comprising scale-equivariant convolutional layers. NADERI HANIEH ET AL: "Scale Equivariant CNNs with Scale Steerable Filters", 2020 INTERNATIONAL CONFERENCE ON MACHINE VISION AND IMAGE PROCESSING (MVIP), IEEE, 2020-02-18, pages 1-5,DOI: 10.1109/MVIP49855.2020.9116889.

### Advantages of the invention

Convolutional neural networks (CNNs) can be used effectively as image classifiers. One of the major reasons why convolutional neural networks work as well as they do is their characteristic of translation invariance. This means, that a convolutional layer of a CNN will output the same value for the same object of an image irrespective of the position of the image.

However, convolutional neural networks do not have embedded mechanisms to handle other types of transformations, such as scale. However, CNNs for image classification are regularly faced with the challenge to correctly classify objects at different scales in an image. This may, for example, be the case, if a CNN is used to classify a video stream of images from a camera, wherein an object is moving towards the camera and hence appears at different scales on different images.

Typically, a CNN is trained with objects at different scales in order to account for changes in scale. However, as disclosed by Ivan Sosnovik, Micha 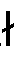 Szmaja, Arnold Smeulders, "Scale-Equivariant Steerable Networks", 2019, https://arxiv.org/abs/1910.11093v1, incorporating a mechanism for scale-equivariance into a CNN improves the performance of the CNN, wherein performance can be understood as the CNNs ability to correctly classify images. The scale-equivariance mechanism is based on constructing the filters of the convolutional layers of the neural network such that they are a weighted sum of a predetermined plurality of basis filters (also referred to as basis functions), wherein the weights can be trained during training of the CNN. Here, the filters of the convolutional layer are also referred to as steerable filters. The basis filters are disclosed to be constructed by a 2D Hermite polynomials with 2D Gaussian envelope.

While the performance of the CNN can be increased by incorporating scale-equivariance into the convolution layers of the CNN, the inventors found that there exists a non-significant error in scale-equivariance.

The advantage of the method with features according to claim 1 is that a CNN with scale-equivariance mechanism can be trained, wherein the basis filters of a convolutional layer of the CNN are learned such that the self-equivariance error of the convolutional layer is minimized. This way, the basis filters can be learned in accordance with the training data of the CNN, which in turn improves the performance of the CNN.

### Disclosure of the invention

In a first aspect, the invention concerns a computer-implemented method according to claim 1.

The scale-equivariant convolutional neural network may be understood as a convolutional neural network that comprises a convolutional layer, wherein the convolutional layer is capable of performing a scale-equivariant convolution of the input to the convolutional layer. In particular, the convolutional layer may comprise a plurality of steerable filters determined from a plurality of basis filters (also known as basis functions). In the context of this invention, the scale-equivariant convolutional neural network can be understood as image classifier. The output signal may characterize a classification of the input image into at least one of a plurality of classes. Alternatively or additionally, the output signal may characterize a classification of at least one object and its location in the input image. Alternatively or additionally, the output signal may characterize a semantic segmentation of the input image into a plurality of classes.

The scale-equivariant convolutional neural network can be configured to accept input image of different types. The input image may, for example, be a camera image, a LIDAR image, a radar image an ultrasonic image or an image as obtained by a thermal camera. It can also be conceived that the input image is generated synthetically, e.g., by means of rendering a computer-implemented virtual scene or as a result of a computer-implemented simulation. An input image may also be obtained by drawing a digital image. It can also be conceived that the scale-equivariant convolutional neural network is configured to accept multiple input images, e.g., from multiple sensors of the same type or a combination of images from different sensors.

The input image may preferably be in the form of a tensor. For determining the output signal, the input image is forwarded through a plurality of layers of the scale-equivariant convolutional neural network, wherein each layer provides an intermediate output, wherein the output is either determined from another layer's intermediate output or from the input image itself. The flow of information determines an order of the plurality of layers. This may be understood as the plurality of layers being a sequence of layers with a predetermined order. If a first layer accepts the intermediate output of a second layer as input, the first layer is considered to precede the second layer and the second layer is considered to follow the first layer. A layer without a predecessor is called input layer while a layer without a successor is called output layer.

The convolutional layer may be placed at an arbitrary position along the sequence of layers. If the convolutional layer is placed at the beginning of the sequence, the input to the convolutional layer, i.e., the convolution input, is the input image directly. Otherwise, the convolutional input is obtained by processing the input image with at least one layer that comes before the convolutional layer.

The convolutional input may be preferably be given as a tensor of a predefined height and width and a predefined amount of channels. Each basis filter of the convolutional layer can be understood to be able to filter a predefined area along the width and height of the convolution input and a predefined depth along the channels of the convolution input. Preferably, the basis filter filters along all channels (i.e., the basis filter "sees" all channels). The predefined area may also be understood as the size of a basis filter. For example, the basis filter may be configured to operate along all channels of a three-channel image (e.g., an RGB image), wherein the filter covers five pixels along the height of the image and five pixels along the width of the image. The filter would hence be of size five by five. Preferably, a basis filter may be represented in form of a tensor, wherein the tensor has a width and height equal to the basis filter's width and height and a number of channels equal to the number of channels the filter sees.

Preferably, the basis filters from the plurality of basis filters are all of the same size and see the same number of channels. This way, a steerable convolution can advantageously be determined by a weighted sum of the basis filters.

The plurality of basis filters can be determined by scaling a first plurality of initial basis filters according to the scales from a plurality of scales and providing the plurality of basis filters based on the plurality of scaled initial basis filters.

Scaling a basis filter may be understood as increasing or decreasing the size of the basis filter according to a multiplication of the basis filter's size with a scale value. If the scale value is between 0 and 1, the basis filter is downscaled. If the scale value is above 1 it is upscaled. Scaling can be performed by scaling each channel of the basis filter.

In order for the basis filters from the plurality of basis filters to have the same size, the basis filters in the plurality of scaled initial basis filters are cropped or padded such that they are of the same size as the initial filters.

In the context of this invention, a convolution may preferably be understood as an operation between two tensors, wherein the output of the convolution is again a tensor.

Training the plurality of basis filters comprises the steps of:
- Determining a plurality of intermediate basis filters based on a first plurality of vectors, a second plurality of vectors and a third plurality of scalar values;
- Determining a training convolution input based on a training image (xᵢ);
- Determining a first convolution result based on scaling the training convolution input according to a scale from a plurality of scales;
- Determining a second convolution result based on scaling the plurality of intermediate filters with an inverse of the scale;
- Determining a difference between the first convolution result and the second convolution result;
- Determining a gradient of the difference with respect to the first plurality of vectors, the second plurality of vectors and the third plurality of scalar values;
- Adapting the vectors of the first plurality of vectors, the vectors of the second plurality of vectors and the scalar values of the third plurality of scalar values according to the gradient;
- Determining a plurality of scaled basis filters by scaling each basis filter of the intermediate filters with each scale of the plurality of scales;
- Providing the plurality of scaled basis filters as plurality of basis filters.

The first convolution result may be determined by scaling the training convolution input according to the scale and convolving the scaled training convolution input with the plurality of intermediate basis filters.

The second convolution result may be determined by scaling the plurality of intermediate filters with the inverse of the scale, convolving the training convolution input with the scaled intermediate filters to obtain a first intermediate result, scaling the intermediate result with the scale to obtain a second intermediate result and multiplying the second intermediate result with the scale to obtain the second convolution result.

The inverse of a scale may be understood as the reciprocal of the scale. For example, if a scale is 2 (i.e., scaling with this value would upscale a tensor by a factor of 2), the inverse scale would be 2⁻¹ = 0.5 (i.e., a downscaling of a tensor by a factor of 2).

Both the first convolution result and the second convolution result are preferably given in the form of a tensor. Scaling a tensor with a scale value may be understood as adapting the size of the tensor according to the scale value, possibly interpolating missing values in the process. As a scale value can be understood as a scalar value, multiplying a tensor with a scale value can be understood as a scalar multiplication of a tensor.

The difference can, for example, be obtained by subtracting the first convolution result from the second convolution result and summing the absolute values of the elements of the tensor resulting from the subtraction. Alternatively, instead of using the absolute values of the elements of the tensor, the squared values of the elements may also be used.

The difference may be understood as a measure for a distance between the first convolution result and the second convolution result. If the distance between the first convolution result and the second convolution result is zero, the basis filter is scale-equivariant for the scale.

Preferably, the basis filters are trained by determining differences based on all scales of the plurality of scales and adapting the first plurality of vectors, the second plurality of vectors and the plurality of values according to a gradient of a sum of the determined differences. This way, the basis filters are trained to be scale-equivariant for the plurality of scales.

The first seven steps (steps a. to g.) may be repeated iteratively in order to train the basis filters.

Irrespective of whether the first seven steps (steps a. to g.) are repeated iteratively or not, the intermediate basis filters may each only represent a basis filter for a single scale. In order to use the intermediate basis filters as basis filters for a steerable convolution, each intermediate basis filter is advantageously scaled according to the plurality of scales and the scaled intermediate basis filters are provided as basis filters. This is advantageous as it enables the steerable convolution to actually obtain scale-equivariant outputs.

The difference depends on the vectors of the first plurality of vectors, the vectors of the second plurality of vectors and the scalar values of the third plurality of scalar values through differentiable functions. This means that minimizing the distance can be achieved by gradient descent. For this, the distance may serve as loss value and a gradient of the loss value with respect to the vectors of the first plurality of vectors, the vectors of the second plurality of vectors and the scalar values of the third plurality of scalar values may be determined, e.g., by means of automatic differentiation. Based on the obtained gradients, the vectors of the first plurality of vectors, the vectors of the second plurality of vectors and the scalar values of the third plurality of scalar values may then be adapted according to the gradient by known gradient descent methods, e.g., stochastic gradient descent, Adam or AdamW.

The step of determining the plurality of intermediate basis filters comprises the steps of:
- Determining a first matrix of orthogonal columns based on orthogonalizing the first plurality of vectors;
- Determining a second matrix of orthogonal columns based on orthogonalizing the second plurality of vectors;
- Determining a third matrix, wherein the matrix is a rectangular diagonal matrix and each element of the main diagonal of the third matrix S is determined by determining a result of applying the natural exponential function to a scalar value of the third plurality of scalar values and adding a predefined value to the result.
- Determining a fourth matrix according to the formula$A = USV ,$ wherein ***A*** is the fourth matrix, ***U*** is the first matrix, ***S*** is the third matrix and ***V*** is the second matrix;
- Providing the rows of the fourth matrix as plurality of intermediate basis filters.

Orthogonalizing the first plurality of vectors or the second plurality of vectors may be achieved by means of known orthogonalization or orthonormalizing methods, e.g., a Householder transform or a Gram-Schmidt process.

The first matrix is a square matrix, wherein the amount of columns and the amount of rows is identical to the amount of vectors in the first plurality of vectors.

The second matrix is a square matrix, wherein the amount of columns and the amount of rows is identical to the amount of vectors in the second plurality of vectors.

The method for constructing the fourth matrix may be understood as an inverse singular value decomposition, i.e., a singular value decomposition of the fourth matrix would yield the first matrix, second matrix and third matrix as a result. This has a number of advantages.

First, by construction the rows of the fourth matrix are pairwise orthogonal, i.e., the rows form an orthogonal set. This means that the vectors of the first plurality of vectors, the vectors of the second plurality of vectors and the scalars of the third plurality of scalars may be freely adapted by a gradient descent method while the rows of the fourth matrix always form an orthogonal set. This holds even if adapting the vectors of the first plurality of vectors, the vectors of the second plurality of vectors and the scalars of the third plurality of scalars is done iteratively. Hence, by construction of the method, the rows can be used as intermediate basis filters.

Second, by constructing the fourth matrix by the approach that may be seen as an inverse of a singular value decomposition, the degrees of freedom of the fourth matrix are identical to the number of elements in the fourth matrix. This way, the fourth matrix always has full rank. As the matrix has full rank, the dimensionality of the vectors in the first plurality of vectors determines the amount of filters. In turn, by defining the dimensionality of the vectors of the first plurality of vectors, one can dictate how many intermediate basis filters shall be generated. Likewise, by determining the dimensionality of the vectors of the second plurality of vectors, one can dictate how many elements shall be present an intermediate basis filter. The number of elements may be understood as the number of elements in a tensor, wherein the tensor represents the intermediate basis filter. For example, if the amount of intermediate basis filters shall be 25, wherein each intermediate basis filter has size 3 by 3 and sees 3 channels, the dimensionality of the vectors of the first plurality may be set to 25, while the dimensionality of vectors in the second plurality may be set to 27 (3 · 3 · 3 = 27). This way, the approach is guaranteed to provide the correct amount basis filters of the correct size and depth.

In summary, the advantage is that the amount, size and depth of the intermediate basis filters may be determined by simply determining the dimensionality of the vectors of the first plurality of vectors and the dimensionality of the vectors of the second plurality of vectors.

As the rows of the fourth matrix are vectors, providing the rows as intermediate basis filters may include realigning the elements of each row such that each row forms a tensor of the correct height width and depth. This procedure is also known as reshaping.

The amount of vectors in the first plurality of vectors and the amount of vectors in the second plurality of vectors may be chosen arbitrarily. In particular, the two amounts may be seen as a hyperparameter of training the basis filters.

It can be further imagined that the training convolution input is either the training image or an intermediate output of the scale-equivariant convolutional neural network for the training image.

The convolutional layer may be either used as input layer, in which case the training convolution input is an images, or as a hidden layer, in which case training convolution input is an output of another layer, wherein the output is determined by propagating the image through the layers preceding the convolutional layer.

For learning the basis filters, a plurality of training convolution inputs may preferably be used. The plurality of training convolutions may hence comprise either a plurality of training images or a plurality of outputs of the layers preceding the convolutional layer for a plurality of training images.

It can be further imagined that the convolution output of the convolutional layer is determined by the following steps:
- Determining the plurality of steerable filters, wherein each steerable filter is determined by a weighted sum of the basis filters, wherein each steerable filter comprises a weight for each basis filter;
- Determining a convolution result by convolving the convolution input with the steerable filters;
- Providing the convolution result as convolution output.

It can be further imagined that training the scale-equivariant convolutional neural network further comprises the steps of:
- Determining a training image and a desired output signal, wherein the desired output signal characterizes a classification of the training image;
- Determining an output signal for the training image by providing the training image as input image to the scale-equivariant convolutional neural network;
- Determining a loss value characterizing a difference between the determined output signal and the desired output signal;
- Determining a gradient of the loss value with respect to the weights of the steerable filters;
- Adapting at least a part of the weights of the steerable filters according to the negative gradient.

The basis filters may be understood as fixed when training the weights of the basis filters.

In the step of determining the loss value, the loss value may be determined by a loss function, e.g., a multinomial cross entropy loss function or a binary cross entropy loss function.

The gradient may be determined through backpropagation of the loss value.

Adapting the weights of the steerable filters may then be achieved by a gradient descent method, e.g., stochastic gradient descent, Adam or AdamW.

When adapting the weights, it can be imagined that some of the weights are also fixed and are not adapted during training of the weights. In particular, it can be imagined that a steerable filter has non-zero weights for only those basis filters that have been obtained from the intermediate basis filters for a predefined scale. The weights of other steerable filters may in particular be fixed such that all steerable filters cover all scales of the plurality of scales.

Embodiments of the invention will be discussed with reference to the following figures in more detail. The figures show:
- Figure 1: a flow-chart depicting a method for training a scale-equivariant convolutional neural network;
- Figure 2: a control system comprising the scale-equivariant convolutional neural network controlling an actuator in its environment;
- Figure 3: the control system controlling an at least partially autonomous robot;
- Figure 4: the control system controlling a manufacturing machine;
- Figure 5: the control system controlling an automated personal assistant;
- Figure 6: the control system controlling an access control system;
- Figure 7: the control system controlling a surveillance system;
- Figure 8: the control system controlling an imaging system;
- Figure 9: the control system controlling a medical analysis system;
- Figure 10: a training system for training the scale-equivariant convolutional neural network.

### Description of the embodiments

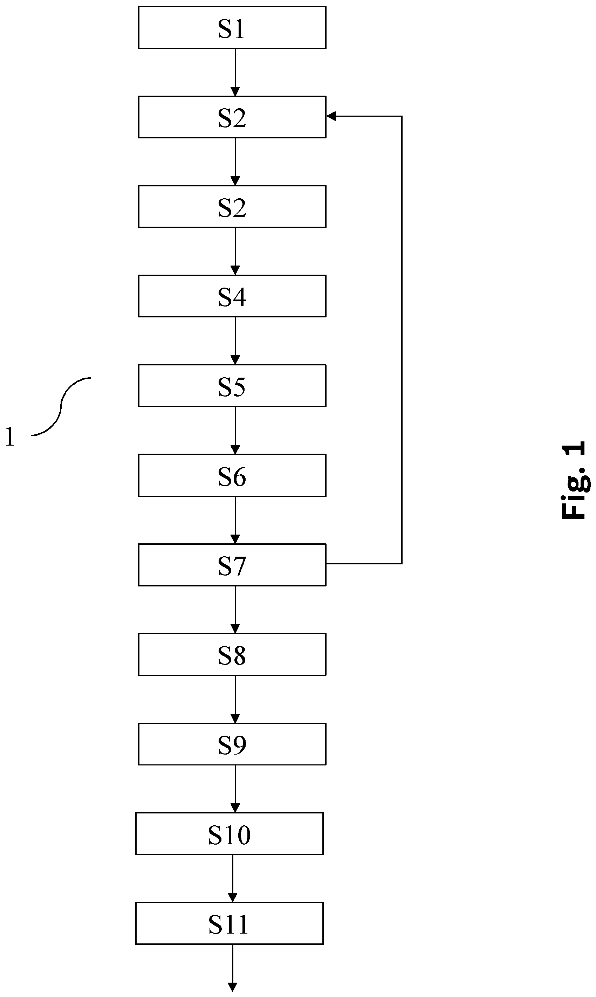

Shown in figure 1 is a flowchart of an embodiment of a method (1) for training a scale-equivariant convolutional neural network. The scale-equivariant convolutional neural network is configured to accept a camera image as input and provide an output signal characterizing a classification of the camera image. In the following, the scale-equivariant neural network will simply be referred to as image classifier. The image classifier comprises a convolutional layer, which in turn comprises a predefined amount of steerable filters, wherein the steerable filters are of a same height, width and depth. Training the image classifier comprises training a plurality of basis filters of the steerable filters as well as training a plurality of weights of the steerable filters. The basis filters are trained by training a plurality of intermediate basis filters and scaling each intermediate basis filter to a scale from a plurality of predefined scales.

In the embodiment, the convolutional layer is an input layer of the image classifier. In further embodiments, the convolutional layer may be placed at arbitrary other positions along the sequence of layers of the image classifier.

For training the plurality of basis filters, a first plurality of vectors is determined by randomly sampling vectors from a predefined probability distribution in a first step (S1). The vectors are sampled such that their dimensionality is equal to a desired amount of intermediate basis filters. Furthermore, a second plurality of vectors is determined by randomly sampling vectors from a predefined probability distribution. The vectors of the second plurality are sampled such that their dimensionality is equal to the product of the desired height, desired width and desired depth of the steerable filters. For example, it can be imagined that the steerable filters shall be of height 3, width 3 and depth 3. The dimensionality of the vectors of the second plurality of vectors would hence be 27. Furthermore, a third plurality of scalar values is determined by randomly sampling values from a predefined probability distribution, wherein as many scalar values are sampled for the third plurality of scalar values as there are dimensions in the vectors of the first plurality of vectors.

The predefined probability distributions may preferably be multivariate normal distributions or univariate normal distributions. However, other types of probability distributions can be used as well.

The first plurality of vectors is then orthogonalized by determining the Householder matrix ${P}_{i}^{\left(1\right)} = I - 2 \frac{{u}_{i} {u}_{i}^{T}}{{u}_{i}^{T} {u}_{i} + {δ}_{1}}$ for each vector of the first plurality of vectors, wherein *uᵢ* is the *i*-th vector of the first plurality of vectors (given as column vector) and *I* is an identity matrix. Preferably, a predefined value *δ*₁ is added to the denominator. In further embodiments, the predefined value *δ*₁ may also be left out or set to zero. Based on the obtained Householder matrices, a first matrix ${M}_{1} = {P}_{1}^{\left(1\right)} ⋅ {P}_{2}^{\left(1\right)} ⋅ ⋯ ⋅ {P}_{N}^{\left(1\right)}$

Is determined by a matrix multiplication of all Householder matrices obtained for the *N* vectors of the first plurality of vectors.

The second plurality of vectors is the orthogonalized by determining the Householder matrix ${P}_{i}^{\left(2\right)} = I - 2 \frac{{v}_{i} {v}_{i}^{T}}{{v}_{i}^{T} {v}_{i} + {δ}_{2}}$ for each vector of the second plurality of vectors, wherein *vᵢ* is the *i*-th vector of the second plurality of vectors (given as column vector) and *I* is an identity matrix. Preferably, a predefined value *δ*₂ is added to the denominator, which may be the same values as *δ*₁. In further embodiments, the predefined value *δ*₂ may also be left out or set to zero. Based on the obtained Householder matrices, a second matrix ${M}_{2} = {P}_{1}^{\left(2\right)} ⋅ {P}_{2}^{\left(2\right)} ⋅ ⋯ ⋅ {P}_{M}^{\left(2\right)}$ is determined by a matrix multiplication of all Householder matrices obtained for the *M* vectors of the second plurality of vectors.

A third matrix ${M}_{3} = \left(\begin{matrix}ϵ + {e}^{{s}_{1}} & & & 0 \\ & ⋱ & & ⋮ \\ & & ϵ + {e}^{{s}_{N}} & 0\end{matrix}\right)$ is then determined, wherein the height of the third matrix is identical to the width of the first matrix and the width of the third matrix is identical to the height of the second matrix and all elements of the matrix but the elements on the main diagonal are zero. The *i*-th element of the main diagonal (i.e., the element at position (*i, i*) of the third matrix) is determined by applying the natural exponential function to the i-th scalar of the third plurality of scalars and adding a predefined value *ε*. In further embodiments, *ε* may also be left out or set to zero.

A fourth matrix ${M}_{4} = {M}_{1} ⋅ {M}_{3} ⋅ {M}_{2}$ is then determined by a matrix product of the first, third and second matrix. The fourth matrix is then reshaped into a tensor by reshaping each row of the fourth matrix into a tensor of the desired shape of the basis filters and stacking the resulting tensors. The reshaped tensor can then be understood as a tensor representing the intermediate filters (e.g., the reshaped rows of the fourth matrix).

In a second step (S2), a training convolution input is determined for training the intermediate filters. In the embodiment, the training convolution input is a training image of the image classifier. In the further embodiments, which have the convolutional layer placed at other positions along the sequence of layers, the training convolution input is a tensor representing the output of processing the training image with the layers preceding the convolutional layer.

In a third step (S3), a first plurality of first convolution results is determined as follows: For each scale of the plurality of predefined scales a first convolution result is determined by scaling the training convolution input according to the scale and convolving the scaled training convolution input with the tensor representing the intermediate filters.

In a fourth step (S4), a second plurality of second convolution results is determined as follows: For each scale of the plurality of predefined scales a second convolution result is determined by scaling the plurality of intermediate filters with the inverse of the scale, convolving the training convolution input with the scaled intermediate filters to obtain a first intermediate result, scaling the intermediate result with the scale to obtain a second intermediate result and multiplying the second intermediate result with the scale to obtain the second convolution result.

In a fifth step (S5), a difference is determined between each first convolution result and each second convolution result that have been obtained using the same scale. The difference may for example obtained by subtracting the first convolution result from the second convolution result and summing the absolute values of the tensor resulting from the subtraction. In further embodiments, it can also be envisioned that the difference may be obtained by summing the squared values of the tensor resulting from the subtraction.

In a sixth step (S6), a gradient of the difference with respect to the vectors of the first plurality of vectors, the vectors of the second plurality of vectors and the scalar values of the third plurality of scalar values is determined. As the difference is determined based on a computational graph involving the vectors of the first plurality of vectors, the vectors of the second plurality of vectors and the scalar values of the third plurality of scalar values as input, this can preferably be achieved by means of automatic differentiation. In further embodiments, the gradient may only be determined for a part of the vectors of the first plurality of vectors and/or a part of the vectors of the second plurality of vectors and/or a part of the scalar values of the third plurality of scalar values.

In a seventh step (S7) the vectors of the first plurality of vectors, the vectors of the second plurality of vectors and the scalar values from the third plurality of scalar values are adapted according to gradient. Preferably, this is achieved by a gradient descent step on the first, second and third plurality with respect to the difference. For gradient descent, known methods such as, e.g., stochastic gradient descent, Adam or AdamW may be used.

In further embodiments, the steps two (S2) to seven (S7) may be repeated iteratively, wherein in at least one iteration the vectors of the first plurality of vectors obtained in a seventh step (S7) are used as vectors of the first plurality of vectors in a consecutive second step (S2) and/or the vectors of the second plurality of vectors obtained in a seventh step (S7) are used as vectors of the second plurality of vectors in a consecutive second step (S2) and/or the scalar values of the third plurality of scalar values obtained in a seventh step (S7) are used as scalar values of the third plurality of vectors in a consecutive second step (S2).

After gradient descent, a plurality of intermediate basis filters is obtained from the trained vectors of the first plurality of vectors, the trained vectors of the second plurality of vectors and the trained scalar values from the third plurality of scalar values in an eight step (S8). Obtaining the plurality of intermediate basis filters is done as in step one (S1) except for using the trained vectors of the first plurality of vectors, the train vectors of the second plurality of vectors and the trained scalar values of the third plurality of scalar values instead of random sampling.

In a ninth step (S9), a plurality of scaled basis filters is determined by scaling each of the intermediate basis filters obtained in step eight (S8) with each scale of the predefined scales. If after scaling a scaled intermediate basis filter is larger in height than the desired height and/or larger in width than the desired width, the scaled intermediate basis filter is cropped to the desired height and/or desired width. If after scaling a scaled intermediate basis filter is smaller in height than the desired height and/or smaller in width than the desired width, the intermediate basis filter is padded (preferably zero padded) to the desired height and/or desired width.

In a tenth step (10), the scaled basis filters are provided as plurality of basis filters of the steerable filters of the convolutional layer, i.e., as plurality of trained basis filters.

In an eleventh step (S11), the weights of the steerable filters are trained. This can be achieved by determining an output signal of the image classifier for a training image, determining a difference between the determined output signal and a desired output signal for the training image and adapting the weights of the steerable filters according to the gradient of the difference with respect to the weights. This may be understood as running gradient descent on the weights with respect to the difference. The difference may be understood as loss in a gradient descent framework. For determining the difference, known loss functions may be used, e.g., multinomial cross entropy loss, binary cross entropy loss, L₂-loss or L₁-loss.

Afterwards, the image classifier is provided as trained classifier. This concludes the method.

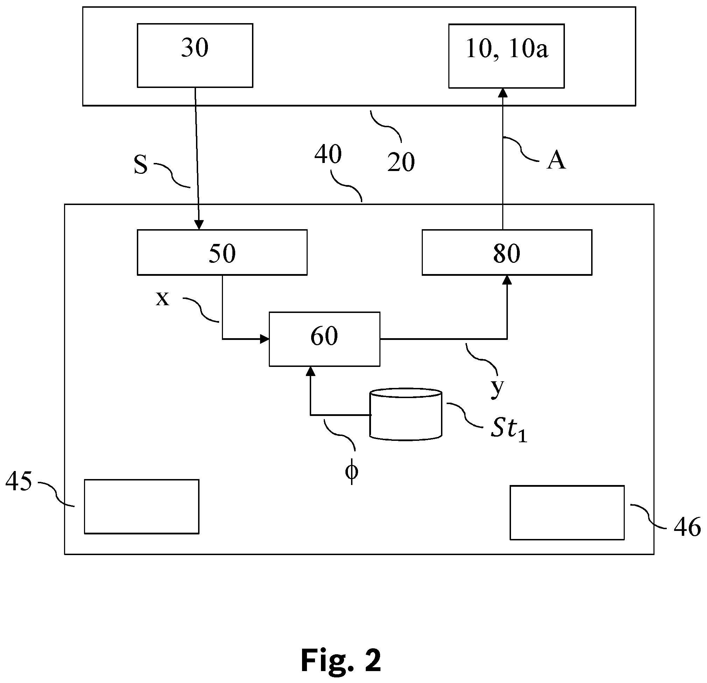

Shown in figure 2 is an embodiment of an actuator (10) in its environment (20). The actuator (10) interacts with a control system (40). The actuator (10) and its environment (20) will be jointly called actuator system. At preferably evenly spaced points in time, a sensor (30) senses a condition of the actuator system. The sensor (30) may comprise several sensors. The sensor (30) is an optical sensor that takes images of the environment (20). An output signal (S) of the sensor (30) (or, in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of control signals (A) depending on the stream of sensor signals (S), which are then transmitted to the actuator (10).

The control system (40) receives the stream of sensor signals (S) of the sensor (30) in an optional receiving unit (50). The receiving unit (50) transforms the sensor signals (S) into input images (x). Alternatively, in case of no receiving unit (50), each sensor signal (S) may directly be taken as an input image (x). The input image (x) may, for example, be given as an excerpt from the sensor signal (S). Alternatively, the sensor signal (S) may be processed to yield the input image (x). In other words, the input image (x) is provided in accordance with the sensor signal (S).

The input image (x) is then passed on to an image classifier (60), wherein the image classifier (60) has been trained with the method (1) as shown in figure 1.

The image classifier (60) is parametrized by parameters (Φ), which are stored in and provided by a parameter storage (*St*₁)*.* In particular, the parameters (Φ) comprise the trained basis filters as well as the trained weights of the steerable filters.

The image classifier (60) determines an output signal (y) from the input image s (x). The output signal (y) comprises information that assigns one or more labels to the input signal (x). The output signal (y) is transmitted to an optional conversion unit (80), which converts the output signal (y) into the control signals (A). The control signals (A) are then transmitted to the actuator (10) for controlling the actuator (10) accordingly. Alternatively, the output signal (y) may directly be taken as control signal (A).

The actuator (10) receives control signals (A), is controlled accordingly and carries out an action corresponding to the control signal (A). The actuator (10) may comprise a control logic which transforms the control signal (A) into a further control signal, which is then used to control actuator (10).

In further embodiments, the control system (40) may comprise the sensor (30). In even further embodiments, the control system (40) alternatively or additionally may comprise an actuator (10).

In still further embodiments, it can be envisioned that the control system (40) controls a display (10a) instead of or in addition to the actuator (10).

Furthermore, the control system (40) may comprise at least one processor (45) and at least one machine-readable storage medium (46) on which instructions are stored which, if carried out, cause the control system (40) to carry out a method according to an aspect of the invention.

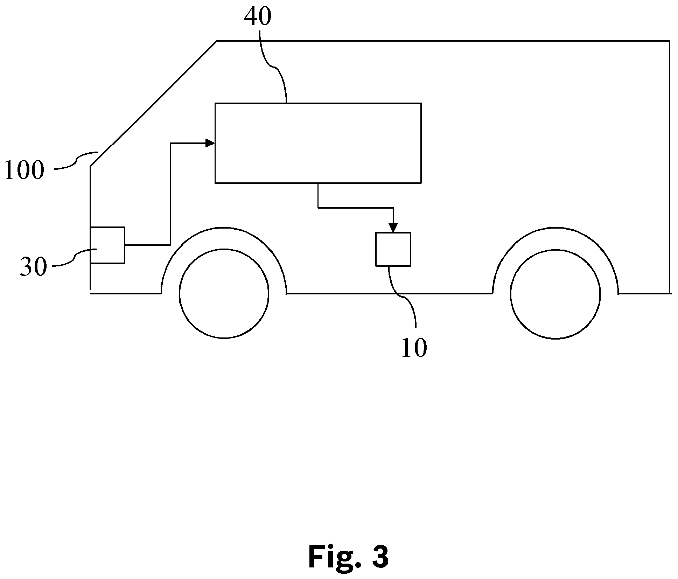

Figure 3 shows an embodiment in which the control system (40) is used to control an at least partially autonomous robot, e.g., an at least partially autonomous vehicle (100).

The sensor (30) may comprise one or more video sensors and/or one or more radar sensors and/or one or more ultrasonic sensors and/or one or more LiDAR sensors. Some or all of these sensors are preferably but not necessarily integrated in the vehicle (100).

The image classifier (60) may be configured to detect objects in the vicinity of the at least partially autonomous robot based on the input image (x). The output signal (y) may comprise an information, which characterizes where objects are located in the vicinity of the at least partially autonomous robot. The control signal (A) may then be determined in accordance with this information, for example to avoid collisions with the detected objects.

The actuator (10), which is preferably integrated in the vehicle (100), may be given by a brake, a propulsion system, an engine, a drivetrain, or a steering of the vehicle (100). The control signal (A) may be determined such that the actuator (10) is controlled such that vehicle (100) avoids collisions with the detected objects. The detected objects may also be classified according to what the image classifier (60) deems them most likely to be, e.g., pedestrians or trees, and the control signal (A) may be determined depending on the classification.

Alternatively or additionally, the control signal (A) may also be used to control the display (10a), e.g., for displaying the objects detected by the image classifier (60). It can also be imagined that the control signal (A) may control the display (10a) such that it produces a warning signal, if the vehicle (100) is close to colliding with at least one of the detected objects. The warning signal may be a warning sound and/or a haptic signal, e.g., a vibration of a steering wheel of the vehicle.

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, the control signal (A) may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses the sensor (30), preferably an optical sensor, to determine a state of plants in the environment (20). The actuator (10) may control a nozzle for spraying liquids and/or a cutting device, e.g., a blade. Depending on an identified species and/or an identified state of the plants, an control signal (A) may be determined to cause the actuator (10) to spray the plants with a suitable quantity of suitable liquids and/or cut the plants.

In even further embodiments, the at least partially autonomous robot may be given by a domestic appliance (not shown), like e.g. a washing machine, a stove, an oven, a microwave, or a dishwasher. The sensor (30), e.g., an optical sensor, may detect a state of an object which is to undergo processing by the household appliance. For example, in the case of the domestic appliance being a washing machine, the sensor (30) may detect a state of the laundry inside the washing machine. The control signal (A) may then be determined depending on a detected material of the laundry.

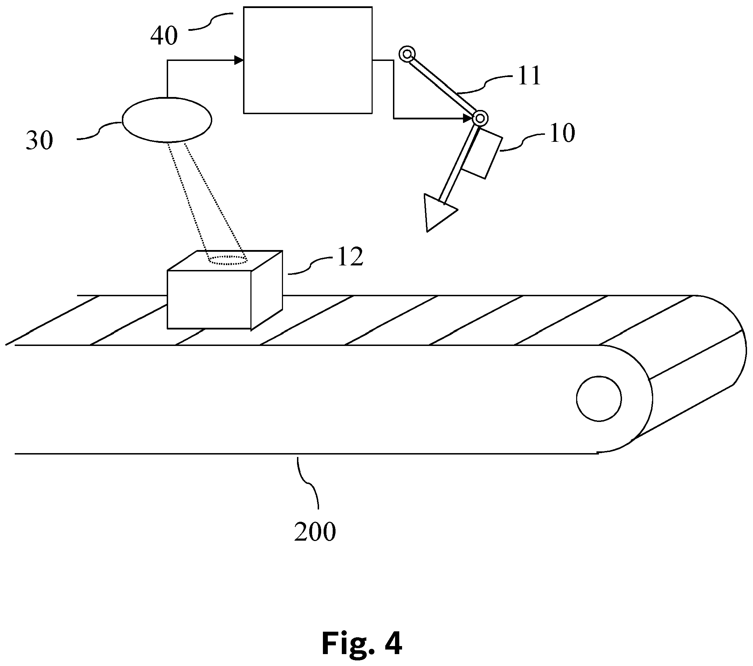

Shown in figure 4 is an embodiment in which the control system (40) is used to control a manufacturing machine (11), e.g., a punch cutter, a cutter, a gun drill or a gripper, of a manufacturing system (200), e.g., as part of a production line. The manufacturing machine may comprise a transportation device, e.g., a conveyer belt or an assembly line, which moves a manufactured product (12). The control system (40) controls an actuator (10), which in turn controls the manufacturing machine (11).

The sensor (30) may be given by an optical sensor which captures properties of, e.g., a manufactured product (12).

The image classifier (60) may determine a position of the manufactured product (12) with respect to the transportation device. The actuator (10) may then be controlled depending on the determined position of the manufactured product (12) for a subsequent manufacturing step of the manufactured product (12). For example, the actuator (10) may be controlled to cut the manufactured product at a specific location of the manufactured product itself. Alternatively, it may be envisioned that the image classifier (60) classifies, whether the manufactured product is broken or exhibits a defect. The actuator (10) may then be controlled as to remove the manufactured product from the transportation device.

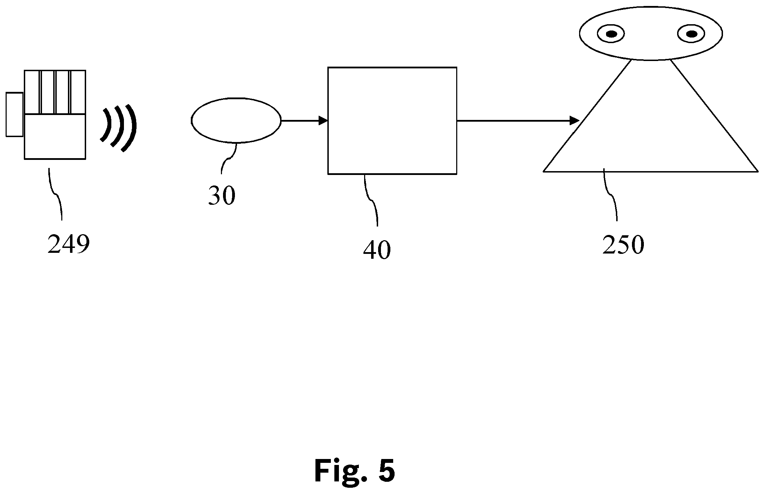

Shown in figure 5 is an embodiment in which the control system (40) is used for controlling an automated personal assistant (250). The sensor (30) may be an optic sensor, e.g., for receiving video images of a gestures of a user (249). Alternatively, the sensor (30) may also be an audio sensor, e.g., for receiving a voice command of the user (249).

The control system (40) then determines control signals (A) for controlling the automated personal assistant (250). The control signals (A) are determined in accordance with the sensor signal (S) of the sensor (30). The sensor signal (S) is transmitted to the control system (40). For example, the classifier (60) may be configured to, e.g., carry out a gesture recognition algorithm to identify a gesture made by the user (249). The control system (40) may then determine a control signal (A) for transmission to the automated personal assistant (250). It then transmits the control signal (A) to the automated personal assistant (250).

For example, the control signal (A) may be determined in accordance with the identified user gesture recognized by the classifier (60). It may comprise information that causes the automated personal assistant (250) to retrieve information from a database and output this retrieved information in a form suitable for reception by the user (249).

In further embodiments, it may be envisioned that instead of the automated personal assistant (250), the control system (40) controls a domestic appliance (not shown) controlled in accordance with the identified user gesture. The domestic appliance may be a washing machine, a stove, an oven, a microwave or a dishwasher.

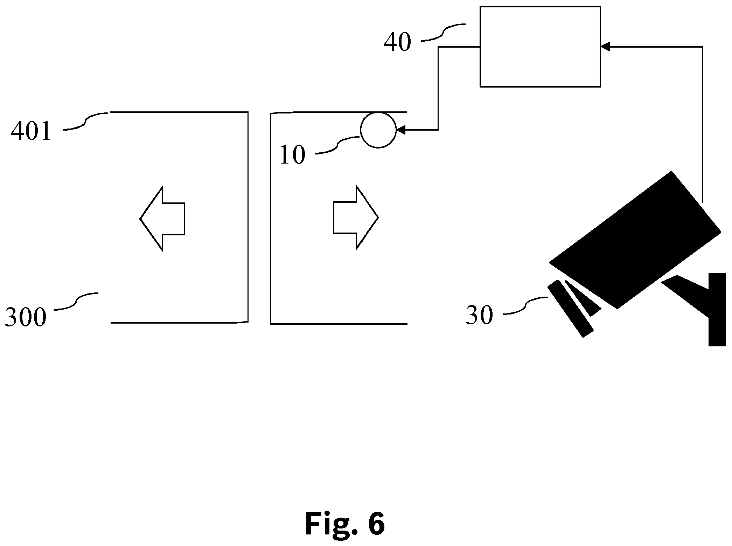

Shown in figure 6 is an embodiment in which the control system (40) controls an access control system (300). The access control system (300) may be designed to physically control access. It may, for example, comprise a door (401). The sensor (30) can be configured to detect a scene that is relevant for deciding whether access is to be granted or not. It may, for example, be an optical sensor for providing image or video data, e.g., for detecting a person's face.

The image classifier (60) may be configured to classify an identity of the person, e.g., by matching the detected face of the person with other faces of known persons stored in a database, thereby determining an identity of the person. The control signal (A) may then be determined depending on the classification of the image classifier (60), e.g., in accordance with the determined identity. The actuator (10) may be a lock which opens or closes the door depending on the control signal (A). Alternatively, the access control system (300) may be a non-physical, logical access control system. In this case, the control signal may be used to control the display (10a) to show information about the person's identity and/or whether the person is to be given access.

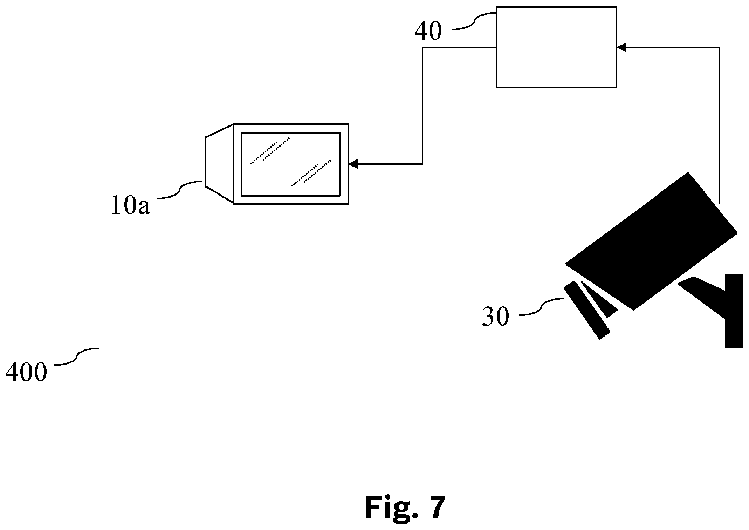

Shown in figure 7 is an embodiment in which the control system (40) controls a surveillance system (400). This embodiment is largely identical to the embodiment shown in figure 6. Therefore, only the differing aspects will be described in detail. The sensor (30) is configured to detect a scene that is under surveillance. The control system (40) does not necessarily control an actuator (10), but may alternatively control a display (10a). For example, the image classifier (60) may determine a classification of a scene, e.g., whether the scene detected by an optical sensor (30) is normal or whether the scene exhibits an anomaly. The control signal (A), which is transmitted to the display (10a), may then, for example, be configured to cause the display (10a) to adjust the displayed content dependent on the determined classification, e.g., to highlight an object that is deemed anomalous by the image classifier (60).

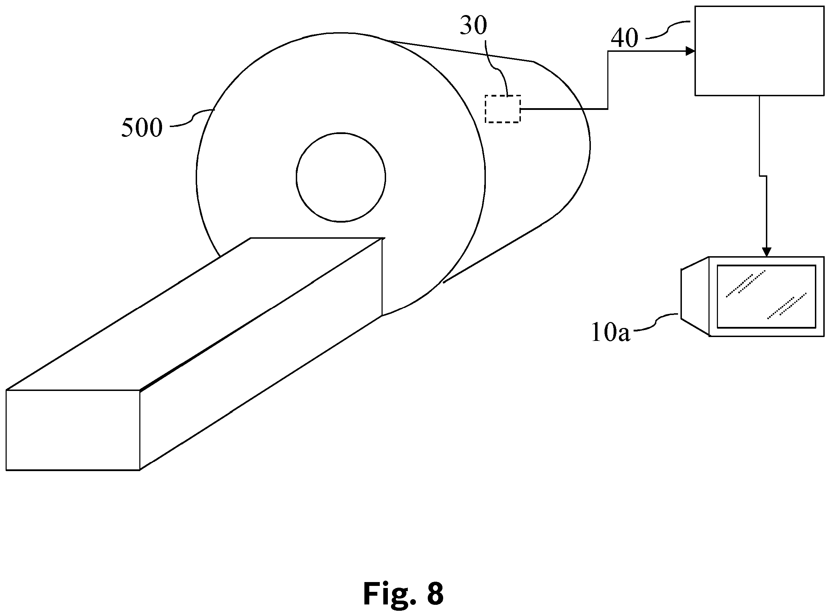

Shown in figure 8 is an embodiment of a medical imaging system (500) controlled by the control system (40). The imaging system may, for example, be an MRI apparatus, x-ray imaging apparatus or ultrasonic imaging apparatus. The sensor (30) may, for example, be an imaging sensor which takes at least one image of a patient, e.g., displaying different types of body tissue of the patient.

The classifier (60) may then determine a classification of at least a part of the sensed image. The at least part of the image is hence used as input image (x) to the classifier (60).

The control signal (A) may then be chosen in accordance with the classification, thereby controlling a display (10a). For example, the image classifier (60) may be configured to detect different types of tissue in the sensed image, e.g., by classifying the tissue displayed in the image into either malignant or benign tissue. This may be done by means of a semantic segmentation of the input image (x) by the image classifier (60). The control signal (A) may then be determined to cause the display (10a) to display different tissues, e.g., by displaying the input image (x) and coloring different regions of identical tissue types in a same color.

In further embodiments (not shown) the imaging system (500) may be used for non-medical purposes, e.g., to determine material properties of a workpiece. In these embodiments, the image classifier (60) may be configured to receive an input image (x) of at least a part of the workpiece and perform a semantic segmentation of the input image (x), thereby classifying the material properties of the workpiece. The control signal (A) may then be determined to cause the display (10a) to display the input image (x) as well as information about the detected material properties.

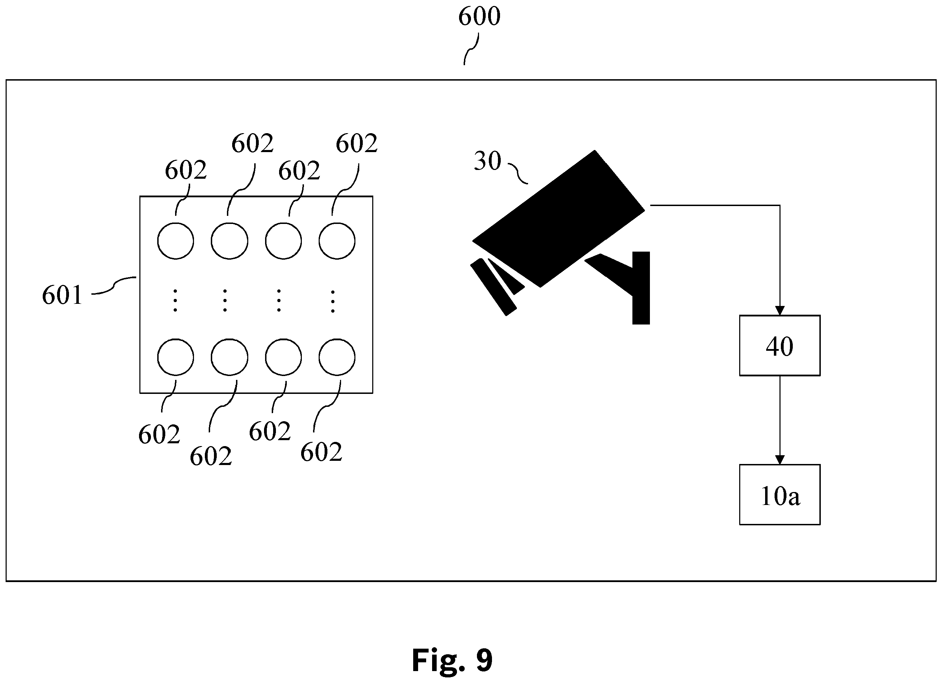

Shown in figure 9 is an embodiment of a medical analysis system (600) being controlled by the control system (40). The medical analysis system (600) is supplied with a microarray (601), wherein the microarray comprises a plurality of spots (602, also known as features) which have been exposed to a medical specimen. The medical specimen may, for example, be a human specimen or an animal specimen, e.g., obtained from a swab.

The microarray (601) may be a DNA microarray or a protein microarray.

The sensor (30) is configured to sense the microarray (601). The sensor (30) is preferably an optical sensor such as a video sensor.

The image classifier (60) is configured to classify a result of the specimen based on an input image (x) of the microarray supplied by the sensor (30). In particular, the image classifier (60) may be configured to determine whether the microarray (601) indicates the presence of a virus in the specimen.

The control signal (A) may then be chosen such that the display (10a) shows the result of the classification.

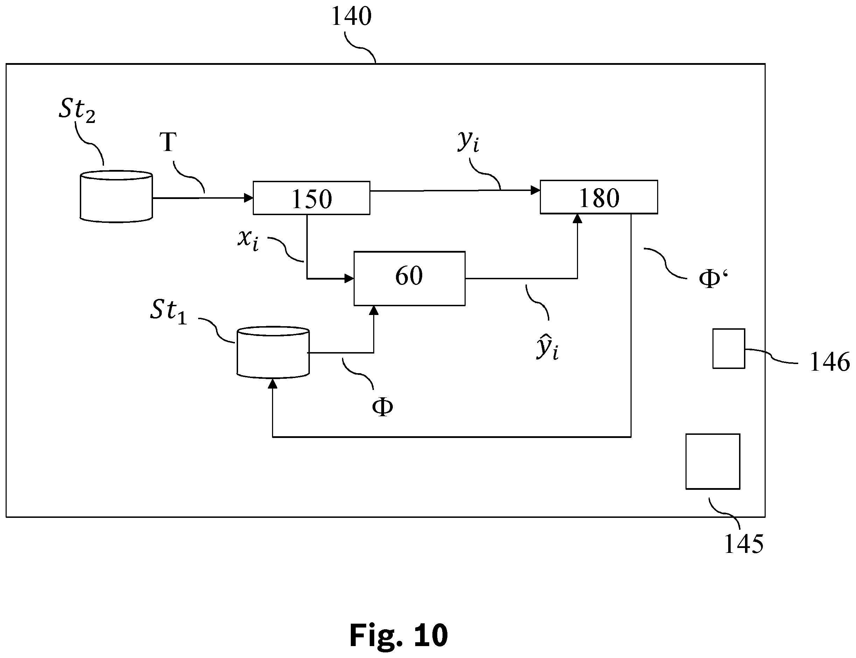

Figure 10 shows an embodiment of a training system (140) for training the classifier (60) of the control system (40) by means of a training data set (T). The training data set (T) comprises a plurality of input signals (xᵢ) which are used for training the classifier (60), wherein the training data set (T) further comprises, for each input signal (xᵢ), a desired output signal (yᵢ) which corresponds to the input signal (xᵢ) and characterizes a classification of the input signal (xᵢ).

For training, a training data unit (150) accesses a computer-implemented database (St₂), the database (St₂) providing the training data set (T). The training data unit (150) determines from the training data set (T) preferably randomly at least one input signal (xᵢ) and the desired output signal (yᵢ) corresponding to the input signal (xᵢ) and transmits the input signal (xᵢ) to the classifier (60). The classifier (60) determines an output signal (*ŷᵢ*) based on the input signal (xᵢ).

The desired output signal (yᵢ) and the determined output signal (*ŷᵢ*) are transmitted to a modification unit (180).

Based on the desired output signal (yᵢ) and the determined output signal (*ŷᵢ*), the modification unit (180) then determines new parameters (Φ') for the classifier (60). For this purpose, the modification unit (180) compares the desired output signal (yᵢ) and the determined output signal (*ŷᵢ*) using a loss function. The loss function determines a first loss value that characterizes how far the determined output signal (*ŷᵢ*) deviates from the desired output signal (yᵢ). In the given embodiment, a negative log-likehood function is used as the loss function. Other loss functions are also conceivable in alternative embodiments.

Furthermore, it is conceivable that the determined output signal (*ŷᵢ*) and the desired output signal (yᵢ) each comprise a plurality of sub-signals, for example in the form of tensors, wherein a sub-signal of the desired output signal (yᵢ) corresponds to a sub-signal of the determined output signal (*ŷᵢ*). It is conceivable, for example, that the classifier (60) is configured for object detection and a first sub-signal characterizes a probability of occurrence of an object with respect to a part of the input signal (xᵢ) and a second sub-signal characterizes the exact position of the object. If the determined output signal (*ŷᵢ*) and the desired output signal (yᵢ) comprise a plurality of corresponding sub-signals, a second loss value is preferably determined for each corresponding sub-signal by means of a suitable loss function and the determined second loss values are suitably combined to form the first loss value, for example by means of a weighted sum.

The modification unit (180) determines the new parameters (Φ') based on the first loss value. In the given embodiment, this is done using a gradient descent method, preferably stochastic gradient descent, Adam, or AdamW.

In other preferred embodiments, the described training is repeated iteratively for a predefined number of iteration steps or repeated iteratively until the first loss value falls below a predefined threshold value. Alternatively or additionally, it is also conceivable that the training is terminated when an average first loss value with respect to a test or validation data set falls below a predefined threshold value. In at least one of the iterations the new parameters (Φ') determined in a previous iteration are used as parameters (Φ) of the classifier (60).

Furthermore, the training system (140) may comprise at least one processor (145) and at least one machine-readable storage medium (146) containing instructions which, when executed by the processor (145), cause the training system (140) to execute a training method according to one of the aspects of the invention.

The term "computer" may be understood as covering any devices for the processing of pre-defined calculation rules. These calculation rules can be in the form of software, hardware or a mixture of software and hardware.

## Claims

1. Computer-implemented method (1) for training a scale-equivariant convolutional neural network (60), wherein the scale-equivariant convolutional neural network (60) is configured to determine an output signal (y) characterizing a classification of an input image (x) of the scale-equivariant convolutional neural network (60), further wherein the scale-equivariant convolutional neural network (60) comprises a convolutional layer, wherein the convolutional layer is configured to provide a convolution output based on a plurality of steerable filters of the convolutional layer and a convolution input, wherein the convolution input is based on the input image (x) and the steerable filters are determined based on a plurality of basis filters, the method for training comprises training the plurality of basis filters wherein training the plurality of basis filters comprises the steps of:
• Determining (S1, S8) a plurality of intermediate basis filters based on a first plurality of vectors, a second plurality of vectors and a third plurality of scalar values, wherein the dimensionality of the vectors in the first plurality of vectors determines the amount of intermediate basis filters, the dimensionality of the second plurality of vectors is equal to the product of the desired height, desired width and desired depth of the steerable filters and wherein the number of the scalar values is equal to the number of dimensions in the vectors of the first plurality of vectors, wherein the intermediate basis filters are determined comprising the steps of:
• Determining a first matrix of orthogonal columns based on orthogonalizing the first plurality of vectors;
• Determining a second matrix of orthogonal columns based on orthogonalizing the second plurality of vectors;
• Determining a third matrix, wherein the matrix is a rectangular diagonal matrix and each element of the main diagonal of the third matrix *S* is determined by determining a result of applying the natural exponential function to a scalar value of the third plurality of scalar values and adding a predefined value to the result.
• Determining a fourth matrix according to the formula ***A** = **USV,***
wherein ***A*** is the fourth matrix, ***U*** is the first matrix, ***S*** is the third matrix and ***V*** is the second matrix;
• Providing the rows of the fourth matrix as plurality of intermediate basis filters;
• Determining (S2) a training convolution input based on a training image (xᵢ);
• Determining (S3) a first convolution result based on scaling the training convolution input according to a scale from a plurality of scales;
• Determining (S4) a second convolution result based on scaling the plurality of intermediate filters with an inverse of the scale;
• Determining (S5) a difference between the first convolution result and the second convolution result;
• Determining (S6) a gradient of the difference with respect to the first plurality of vectors, the second plurality of vectors and the third plurality of scalar values;
• Adapting (S7) the vectors of the first plurality of vectors, the vectors of the second plurality of vectors and the scalar values of the third plurality of scalar values according to the gradient;
• Determining (S9) a plurality of scaled basis filters by scaling each basis filter of the intermediate filters with each scale of the plurality of scales;
• Providing (S10) the plurality of scaled basis filters as plurality of basis filters.

2. Method (1) according to claim 1, wherein the first convolution result is determined by scaling the training convolution input according to the scale and convolving the scaled training convolution input with the plurality of intermediate basis filters.

3. Method (1) according to claim 1 or 2, wherein the second convolution result is determined by scaling the plurality of intermediate filters with the inverse of the scale, convolving the training convolution input with the scaled intermediate filters to obtain a first intermediate result, scaling the intermediate result with the scale to obtain a second intermediate result and multiplying the second intermediate result with the scale to obtain the second convolution result.

4. Method (1) according to any one of the claims 1 to 3, wherein the convolution output of the convolutional layer is determined by the following steps:
• Determining the plurality of steerable filters, wherein each steerable filter is determined by a weighted sum of the basis filters, wherein each steerable filter comprises a weight for each basis filter;
• Determining a convolution result by convolving the convolution input with the steerable filters;
• Providing the convolution result as convolution output.

5. Method (1) according to claim 4, wherein training the scale-equivariant convolutional neural network (60) further comprises the steps of:
• Determining a training image (xᵢ) and a desired output signal (yᵢ), wherein the desired output signal (yᵢ) characterizes a classification of the training image (xᵢ);
• Determining an output signal (*ŷᵢ*) for the training image (xᵢ) by providing the training image (xᵢ) as input image to the scale-equivariant convolutional neural network;
• Determining a loss value characterizing a difference between the determined output signal (*ŷᵢ*) and the desired output signal (yᵢ);
• Determining a gradient of the loss value with respect to the weights of the steerable filters;
• Adapting at least a part of the weights of the steerable filters according to the negative gradient.

6. Method (1) according to any one of the claims 1 to 5, wherein the training convolution input is either the training image (xᵢ) or an intermediate output of the scale-equivariant convolutional neural network for the training image (xᵢ).

7. Computer-implemented method for determining an output signal (y) for an image (x) with a scale-equivariant convolutional neural network, wherein the output signal (y) characterizes a classification of the image (x), the method comprising the steps of:
• Training the scale-equivariant convolutional neural network according to any one of the claims 1 to 6;
• Determining the output signal (y) by providing the image (x) to the trained scale-equivariant convolutional neural network.

8. Method according to claim 7, wherein an actuator (10) and/or a display device (10a) is controlled in accordance with the output signal (y).

9. Training system (140), which is configured to carry out the training method according to any one of the claims 1 to 6.

10. Computer program that is configured to cause a computer to carry out the method according to any one of the claims 1 to 8 with all of its steps if the computer program is carried out by a processor (45, 145).

11. Machine-readable storage medium (46, 146) on which the computer program according to claim 10 is stored.

## Patentansprüche

1. Computer-implementiertes Verfahren (1) zum Trainieren eines skalenäquivarianten neuronalen Faltungsnetzwerks (60), wobei das skalenäquivariante neuronale Faltungsnetzwerk (60) dazu konfiguriert ist, ein Ausgabesignal (y) zu bestimmen, das eine Klassifizierung eines Eingabebildes (x) des skalenäquivarianten neuronalen Faltungsnetzwerks (60) charakterisiert, wobei das skalenäquivariante neuronale Faltungsnetzwerk (60) ferner eine Faltungsschicht umfasst, wobei die Faltungsschicht dazu konfiguriert ist, eine Faltungsausgabe basierend auf einer Mehrzahl von lenkbaren Filtern der Faltungsschicht und einer Faltungseingabe bereitzustellen, wobei die Faltungseingabe auf dem Eingabebild (x) basiert und die lenkbaren Filter basierend auf einer Mehrzahl von Basisfiltern bestimmt werden, wobei das Verfahren zum Trainieren Trainieren der Mehrzahl von Basisfiltern umfasst, wobei das Trainieren der Mehrzahl von Basisfiltern die folgenden Schritte umfasst:
• Bestimmen (S1, S8) einer Mehrzahl von Zwischenbasisfiltern basierend auf einer ersten Mehrzahl von Vektoren, einer zweiten Mehrzahl von Vektoren und einer dritten Mehrzahl von Skalarwerten, wobei die Dimensionalität der Vektoren in der ersten Mehrzahl von Vektoren die Menge von Zwischenbasisfiltern bestimmt, die Dimensionalität der zweiten Mehrzahl von Vektoren gleich dem Produkt der gewünschten Höhe, gewünschten Breite und gewünschten Tiefe der lenkbaren Filter ist, und wobei die Anzahl der Skalarwerte gleich der Anzahl von Dimensionen in den Vektoren der ersten Mehrzahl von Vektoren ist, wobei die Zwischenbasisfilter umfassend die folgenden Schritte bestimmt werden:
• Bestimmen einer ersten Matrix orthogonaler Spalten basierend auf einer Orthogonalisierung der ersten Mehrzahl von Vektoren;
• Bestimmen einer zweiten Matrix orthogonaler Spalten basierend auf einer Orthogonalisierung der zweiten Mehrzahl von Vektoren;
• Bestimmen einer dritten Matrix, wobei die Matrix eine rechteckige Diagonalmatrix ist und jedes Element der Hauptdiagonale der dritten Matrix S durch Bestimmen eines Ergebnisses des Anwendens der natürlichen Exponentialfunktion auf einen Skalarwert der dritten Mehrzahl von Skalarwerten und Addierens eines vordefinierten Werts zu dem Ergebnis bestimmt wird;
• Bestimmen einer vierten Matrix gemäß der Formel A = USV,
wobei A die vierte Matrix ist, U die erste Matrix ist, S die dritte Matrix ist und V die zweite Matrix ist;
• Bereitstellen der Zeilen der vierten Matrix als Mehrzahl von Zwischenbasisfiltern;
• Bestimmen (S2) einer Trainingsfaltungseingabe basierend auf einem Trainingsbild (xᵢ);
• Bestimmen (S3) eines ersten Faltungsergebnisses basierend auf Skalieren der Trainingsfaltungseingabe gemäß einem Maßstab aus einer Mehrzahl von Maßstäben;
• Bestimmen (S4) eines zweiten Faltungsergebnisses basierend auf dem Skalieren der Mehrzahl von Zwischenfiltern mit einem Inversen des Maßstabs;
• Bestimmen (S5) einer Differenz zwischen dem ersten Faltungsergebnis und dem zweiten Faltungsergebnis;
• Bestimmen (S6) eines Gradienten der Differenz in Bezug auf die erste Mehrzahl von Vektoren, die zweite Mehrzahl von Vektoren und die dritte Mehrzahl von Skalarwerten;
• Anpassen (S7) der Vektoren der ersten Mehrzahl von Vektoren, der Vektoren der zweiten Mehrzahl von Vektoren und der Skalarwerte der dritten Mehrzahl von Skalarwerten gemäß dem Gradienten;
• Bestimmen (S9) einer Mehrzahl von skalierten Basisfiltern durch Skalieren jedes Basisfilters der Zwischenfilter mit jedem Maßstab der Mehrzahl von Maßstäben;
• Bereitstellen (S10) der Mehrzahl von skalierten Basisfilter als Mehrzahl von Basisfiltern.

2. Verfahren (1) nach Anspruch 1, wobei das erste Faltungsergebnis durch Skalieren der Trainingsfaltungseingabe gemäß dem Maßstab und Falten der skalierten Trainingsfaltungseingabe mit der Mehrzahl von Zwischenbasisfiltern bestimmt wird.

3. Verfahren (1) nach Anspruch 1 oder 2, wobei das zweite Faltungsergebnis bestimmt wird durch Skalieren der Mehrzahl von Zwischenfiltern mit dem Inversen des Maßstabs, Falten der Trainingsfaltungseingabe mit den skalierten Zwischenfiltern, um ein erstes Zwischenergebnis zu erhalten, Skalieren des Zwischenergebnisses mit dem Maßstab, um ein zweites Zwischenergebnis zu erhalten, und Multiplizieren des zweiten Zwischenergebnisses mit dem Maßstab, um das zweite Faltungsergebnis zu erhalten.

4. Verfahren (1) nach einem der Ansprüche 1 bis 3, wobei die Faltungsausgabe der Faltungsschicht durch die folgenden Schritte bestimmt wird:
• Bestimmen der Mehrzahl von lenkbaren Filtern, wobei jedes lenkbare Filter durch eine gewichtete Summe der Basisfilter bestimmt wird, wobei jedes lenkbare Filter eine Gewichtung für jedes Basisfilter umfasst;
• Bestimmen eines Faltungsergebnisses durch Falten der Faltungseingabe mit den lenkbaren Filtern;
• Bereitstellen des Faltungsergebnisses als Faltungsausgabe.

5. Verfahren (1) nach Anspruch 4, wobei das Trainieren des skalenäquivalenten neuronalen Faltungsnetzwerks (60) ferner die folgenden Schritte umfasst:
• Bestimmen eines Trainingsbildes (xᵢ) und eines gewünschten Ausgabesignals (yᵢ), wobei das gewünschte Ausgabesignal (yᵢ) eine Klassifizierung des Trainingsbildes (xᵢ) charakterisiert;
• Bestimmen eines Ausgabesignals (ŷᵢ) für das Trainingsbild (xᵢ) durch Bereitstellen des Trainingsbildes (xᵢ) als Eingabebild für das skalenäquivariante neuronale Faltungsnetzwerk;
• Bestimmen eines Verlustwerts, der eine Differenz zwischen dem bestimmten Ausgabesignal (ŷᵢ) und dem gewünschten Ausgabesignal (yᵢ) charakterisiert;
• Bestimmen eines Gradienten des Verlustwerts in Bezug auf die Gewichtungen der lenkbaren Filter;
• Anpassen mindestens eines Teils der Gewichte der lenkbaren Filter gemäß dem negativen Gradienten.

6. Verfahren (1) nach einem der Ansprüche 1 bis 5, wobei die Trainingsfaltungseingabe entweder das Trainingsbild (xᵢ) oder eine Zwischenausgabe des skalenäquivarianten faltungsneuronalen Netzwerks für das Trainingsbild (xᵢ) ist.

7. Computer-implementiertes Verfahren zum Bestimmen eines Ausgabesignals (y) für ein Bild (x) mit einem skalenäquivarianten neuronalen Faltungsnetzwerk, wobei das Ausgabesignal (y) eine Klassifizierung des Bildes (x) charakterisiert, wobei das Verfahren die folgenden Schritte umfasst:
• Trainieren des skalenäquivarianten neuronalen Faltungsnetzwerks nach einem der Ansprüche 1 bis 6;
• Bestimmen des Ausgabesignals (y) durch Bereitstellen des Bildes (x) an das trainierte skalenäquivariante neuronale Faltungsnetzwerk.

8. Verfahren nach Anspruch 7, wobei ein Aktuator (10) und/oder eine Anzeigevorrichtung (10a) gemäß dem Ausgabesignal (y) gesteuert wird.

9. Trainingssystem (140), das dazu konfiguriert ist, das Trainingsverfahren nach einem der Ansprüche 1 bis 6 durchzuführen.

10. Computerprogramm, das dazu konfiguriert ist, einen Computer zu veranlassen, das Verfahren nach einem der Ansprüche 1 bis 8 mit allen seinen Schritten durchzuführen, wenn das Computerprogramm von einem Prozessor (45, 145) durchgeführt wird.

11. Maschinenlesbares Speichermedium (46, 146), auf dem das Computerprogramm nach Anspruch 10 gespeichert ist.

## Revendications

1. Procédé mis en œuvre par ordinateur (1) de formation d'un réseau neuronal convolutif à échelle équivariante (60), le réseau neuronal convolutif à échelle équivariante (60) étant configuré pour déterminer un signal de sortie (y) caractérisant une classification d'une image d'entrée (x) du réseau neuronal convolutif à échelle équivariante (60), le réseau neuronal convolutif à échelle équivariante (60) comprenant en outre une couche convolutive, la couche convolutive étant configurée pour fournir une sortie de convolution sur la base d'une pluralité de filtres orientables de la couche convolutive et d'une entrée de convolution, l'entrée de convolution étant basée sur l'image d'entrée (x) et les filtres orientables étant déterminés sur la base d'une pluralité de filtres de base, le procédé de formation comprenant la formation de la pluralité de filtres de base, la formation de la pluralité de filtres de base comprenant les étapes de :
• la détermination (S1, S8) d'une pluralité de filtres de base intermédiaires à partir d'une première pluralité de vecteurs, d'une deuxième pluralité de vecteurs et d'une troisième pluralité de valeurs scalaires, la dimensionnalité des vecteurs de la première pluralité de vecteurs déterminant la quantité de filtres de base intermédiaires, la dimensionnalité de la deuxième pluralité de vecteurs étant égale au produit de la hauteur souhaitée, de la largeur et de la profondeur souhaitées des filtres orientables, et le nombre de valeurs scalaires étant égal au nombre de dimensions dans les vecteurs de la première pluralité de vecteurs, les filtres de base intermédiaires étant déterminés par les étapes de :
• la détermination d'une première matrice de colonnes orthogonales basée sur l'orthogonalisation de la première pluralité de vecteurs,
• la détermination d'une deuxième matrice de colonnes orthogonales basée sur l'orthogonalisation de la deuxième pluralité de vecteurs,
• la détermination d'une troisième matrice, la matrice étant une matrice diagonale rectangulaire et chaque élément de la diagonale principale de la troisième matrice S étant déterminé en déterminant un résultat d'application de la fonction exponentielle naturelle à une valeur scalaire de la troisième pluralité de valeurs scalaires et en ajoutant une valeur prédéfinie au résultat.
• la détermination d'une quatrième matrice selon la formule A = USV,
A étant la quatrième matrice, U étant la première matrice, S étant la troisième matrice et V étant la deuxième matrice ;
• la fourniture des lignes de la quatrième matrice comme une pluralité de filtres de base intermédiaires ;
• la détermination (S2) d'une entrée de convolution de formation sur la base d'une image de formation (xᵢ) ;
• la détermination (S3) d'un premier résultat de convolution basé sur une mise à l'échelle de l'entrée de convolution de formation selon une échelle à partir d'une pluralité d'échelles ;
• la détermination (S4) d'un deuxième résultat de convolution basé sur la mise à l'échelle de la pluralité de filtres intermédiaires avec un inverse de l'échelle ;
• la détermination (S5) d'une différence entre le premier résultat de convolution et le deuxième résultat de convolution ;
• la détermination (S6) d'un gradient de la différence par rapport à la première pluralité de vecteurs, la deuxième pluralité de vecteurs et la troisième pluralité de valeurs scalaires ;
• l'adaptation (S7) des vecteurs de la première pluralité de vecteurs, des vecteurs de la deuxième pluralité de vecteurs et des valeurs scalaires de la troisième pluralité de valeurs scalaires en fonction du gradient ;
• la détermination (S9) d'une pluralité de filtres de base mis à l'échelle en mettant à l'échelle chaque filtre de base des filtres intermédiaires avec chaque échelle de la pluralité d'échelles ;
• la fourniture (S10) de la pluralité de filtres de base mis à l'échelle en tant que pluralité de filtres de base.

2. Procédé (1) selon la revendication 1, le premier résultat de convolution étant déterminé en mettant à l'échelle l'entrée de convolution de formation en fonction de l'échelle et en convoluant l'entrée de convolution de formation mise à l'échelle avec la pluralité de filtres de base intermédiaires.

3. Procédé (1) selon la revendication 1 ou 2, le deuxième résultat de convolution étant déterminé en mettant à l'échelle la pluralité de filtres intermédiaires avec l'inverse de l'échelle, en convoluant l'entrée de convolution de formation avec les filtres intermédiaires mis à l'échelle pour obtenir un premier résultat intermédiaire, en mettant à l'échelle le résultat intermédiaire avec l'échelle pour obtenir un deuxième résultat intermédiaire et en multipliant le deuxième résultat intermédiaire avec l'échelle pour obtenir le deuxième résultat de convolution.

4. Procédé (1) selon l'une quelconque des revendications 1 à 3, la sortie de convolution de la couche convolutive étant déterminée par les étapes suivantes :
• la détermination de la pluralité de filtres orientables, chaque filtre orientable étant déterminé par une somme pondérée des filtres de base, chaque filtre orientable comprenant un poids pour chaque filtre de base ;
• la détermination d'un résultat de convolution en convoluant l'entrée de convolution avec les filtres orientables ;
• la fourniture du résultat de convolution en sortie de convolution.

5. Procédé (1) mis en œuvre selon la revendication 4, la formation du réseau neuronal convolutif à échelle équivariante (60) comprenant en outre les étapes de :
• la détermination d'une image de formation (xᵢ) et d'un signal de sortie souhaité (yᵢ), le signal de sortie souhaité (yᵢ) caractérisant une classification de l'image de formation (xᵢ),
• la détermination d'un signal de sortie (ŷᵢ) pour l'image de formation (xᵢ) en fournissant l'image de formation (xᵢ) comme image d'entrée au réseau neuronal convolutif à échelle équivariante ;
• la détermination d'une valeur de perte caractérisant une différence entre le signal de sortie déterminé (ŷᵢ) et le signal de sortie souhaité (yᵢ),
• la détermination d'un gradient de la valeur de perte par rapport aux poids des filtres orientables ;
• l'adaptation d'au moins une partie des poids des filtres orientables en fonction du gradient négatif.

6. Procédé (1) selon l'une quelconque des revendications 1 à 5, l'entrée de convolution de formation étant soit l'image de formation (xᵢ), soit une sortie intermédiaire du réseau neuronal convolutif à échelle équivariante pour l'image de formation (xᵢ).

7. Procédé mis en œuvre par ordinateur de détermination d'un signal de sortie (y) d'une image (x) avec un réseau neuronal convolutif à échelle équivariante, le signal de sortie (y) caractérisant une classification de l'image (x), le procédé comprenant les étapes de :
• la formation du réseau neuronal convolutif à échelle équivariante selon l'une quelconque des revendications 1 à 6 ;
• la détermination du signal de sortie (y) en fournissant l'image (x) au réseau neuronal convolutif à échelle équivariante entraîné.

8. Procédé selon la revendication 7, un actionneur (10) et/ou un dispositif d'affichage (10a) étant commandés en fonction du signal de sortie (y).

9. Système de formation (140), configuré pour mettre en œuvre le procédé de formation selon l'une quelconque des revendications 1 à 6.

10. Programme informatique configuré pour amener un ordinateur à mettre en œuvre le procédé selon l'une quelconque des revendications 1 à 8 avec toutes ses étapes si le programme informatique est mis en œuvre par un processeur (45, 145).

11. Support de stockage lisible par machine (46, 146) sur lequel le programme informatique selon la revendication 10 est stocké.
